# EUROPEAN PATENT APPLICATION

(11) **EP 4 474 167 A1**
(43) Date of publication of application: **11.12.2024**
(21) Application number: 24179776.0
(22) Date of filing: 04.06.2024
(51) Int. Cl.: B60B 5/02, B60B 7/04, B60B 7/00

(54) **CLOSING ELEMENT FOR A WHEEL RIM OF A VEHICLE AND PROCESS FOR MANUFACTURE THEREOF**

(30) Priority: 07.06.2023 IT 202300011571
(71) Applicant: SPM S.p.A., 21030 Brissago Valtravaglia (IT)
(72) Inventor: BERUTTI, Giovanni, 21030 Brissago Valtravaglia (IT)
(74) Representative: Colombo, Stefano Paolo

(57) **Abstract**

A closing element configured to close at least partially an opening in a rim of a vehicle wheel is described, said element comprising: an outer shell comprising a first thermoplastic material, and a base comprising a second thermoplastic material, the base being integrally joined together with the outer shell, wherein the first thermoplastic material and the second thermoplastic material comprise an engineering plastic.

## Description

### SCOPE

The present invention relates to the sector of vehicles and in particular the sector of wheels for vehicles. Even more particularly, it relates to a shaped (partial or total) closing element for improving the aerodynamics of the wheel rims of motor-driven vehicles, for example automobiles.

### PRIOR ART

As is known, vehicle wheels generally comprise a rim and a tyre mounted on the rim. The rim is in turn fixed onto a hub.

As is known, the aerodynamics of a vehicle plays an important part in determining the consumption levels of the vehicle. In vehicles with a combustion engine, the aerodynamics of the vehicle has an important role in determining the fuel consumption and therefore the running costs of the vehicle. Similarly, in electric propulsion vehicles, the aerodynamics of vehicle significantly influences the autonomy of the vehicle: the more aerodynamic (and lighter) the vehicle is, the greater will be the autonomy and therefore the lower will be the operating costs.

Manufacturers of vehicles and of the individual component parts are constantly researching new solutions aimed at improving the aerodynamic performance, reducing the overall weight of the vehicles and possibly limiting the costs.

In the case of the vehicle wheels, light rims, typically made of aluminium or aluminium alloy, are known. Rims with spokes which are shaped in many different ways exist, these being designed to satisfy the structural and aesthetic requirements of customers and distinguish one product from another.

Also known are additional elements for covering the empty space between the spokes. These elements are fixed to the rim and have the main function of improving the aerodynamics of the rim without negatively affecting its structural characteristics and without significantly increasing the weight of the wheel.

Covering elements are known, for example, from EP 3504069 and DE 10 2011 079 599 A1. The covering element described in EP3504069 comprises a metal layer and a plastic layer which is produced in an insert-moulding process and is joined together with the metal layer.

US 2018/056714 A1 describes a garnish for a metal wheel.

### SUMMARY OF THE INVENTION

The Applicant has carefully examined the known solutions.

The Applicant has noted that the covering element described in EP3504069 is formed by a metal layer and a plastic layer. The metal layer, for example along the edges (which may be cut) tends to oxidize and rust owing to the fact that often it comes into contact with water or moisture. The rust makes the known elements less attractive from an aesthetic point of view, but in particular makes the joint between the two layers more critical. Owing to the rust, the two layers may separate and this possibility results in a high risk of damage to other vehicles or injury of persons who could be struck by fragments of the element.

Another problem of the known solutions concerns the environment, namely the disposal of the element. Obviously, the fact that the covering element described in EP3504069 is formed by a metal layer and by a plastic layer means that correct disposal therefore is extremely complicated and therefore also costly. For correct disposal and efficient recycling, in fact, the metal (typically aluminium) layer should be separated from the plastic layer.

Moreover, in order to reduce the overall weight of a vehicle, each of its parts must be optimized in terms of its weight. The presence of a metal (typically aluminium) layer negatively influences the weight of the component.

Finally, the metal layer is prone to damage following accidental contact with obstacles, for example with the edge of the pavement when parking the vehicle.

The Applicant has defined the aim of providing an improved closing element for closing, at least partially, an opening in a rim of a vehicle wheel. In particular, the Applicant has defined the aim of providing a closing element which is lighter, less subject to wear and more suitable for recycling than the known elements.

According to a first aspect, a closing element configured to close at least partially an opening in a rim of a vehicle wheel is provided, said element comprising:
- an outer shell comprising a first thermoplastic material;
- a base comprising a second thermoplastic material, the base being integrally joined together with the outer shell, wherein the first thermoplastic material and the second thermoplastic material comprise an engineering plastic.

According to embodiments, the outer shell is at least partially transparent. This is particularly advantageous because the at least partially transparent outer shell protects the surface of the base or the second surface (namely the inner surface) of the outer shell without concealing it.

According to embodiments, the outer shell comprises a surface screen-printed and/or decorated with paint and/or pigments.

According to embodiments, the outer shell comprises a first outer surface and a second inner surface, wherein the surface screen-printed and/or decorated with paint and/or pigments is the second surface, namely the inner surface. Therefore, the decorated and/or screen-printed surface is protected from knocks, scratches and external agents.

According to embodiments, the outer shell is thermoformed from a substantially flat sheet.

The outer shell may be joined together with the base by means of a first co-moulding coupling operation and/or a second mechanical coupling operation.

The outer shell may be mechanically fastened to the base by means of a fold along the entire edge of the outer shell or along a part of the edge of the outer shell.

According to embodiments, the engineering plastic is any material selected from: a thermoplastic polymer or a copolymer containing polyacrylonitrile, a thermoplastic polymer obtained from carbonic acid, a polyester resin, a polyamide or any blend of engineering plastics.

According to embodiments, the first material is substantially the same as the second material.

According to embodiments, the engineering plastic comprises, or essentially consists of, a thermoplastic polymer or a copolymer containing polyacrylonitrile.

According to embodiments, the engineering plastic comprises, or essentially consists of, a polycarbonate.

According to embodiments, the engineering plastic comprises, or essentially consists of, a nylon, or Kevlar or Nomex.

According to embodiments, the engineering plastic comprises, or essentially consists of, a mixture of polycarbonate or acrylonitrile-butadiene-styrene.

According to embodiments, the closing element also comprises a fixing member for fixing the closing element to a rim and/or wherein the base is integrally joined together with the outer shell by means of co-moulding and/or mechanical coupling.

According to another aspect, a process for manufacturing a closing element configured to close at least partially an opening in a rim of a vehicle wheel is provided, said process comprising the following steps in any sequence:
- providing a substantially flat sheet made of a first thermoplastic material comprising an engineering plastic;
- screen-printing and/or painting the sheet;
- thermoforming the screen-printed and/or painted sheet;
- cutting the thermoformed sheet so as to obtain a plurality of outer shells; and
- integrally joining one of the outer shells together with a base made of a second thermoplastic material comprising an engineering plastic.

The substantially flat sheet is preferably at least partially transparent.

According to embodiments, the integral joining step comprises co-moulding a base together with one of the outer shells and/or providing a mechanical coupling.

According to embodiments, the process also comprises the step of applying an adhesion promoter to improve the adhesion between shell and base.

According to embodiments,
- the first material is any material selected from: a thermoplastic polymer or a copolymer containing polyacrylonitrile, a thermoplastic polymer obtained from carbonic acid, a polyester resin, a polyamide or any blend of engineering plastics, and
- the second material is any material selected from: a thermoplastic polymer or a copolymer containing polyacrylonitrile, a thermoplastic polymer obtained from carbonic acid, a polyester resin, a polyamide or any blend of engineering plastics.

According to embodiments, the screen-printing step comprises the step of screen-printing the inner surface, namely the surface configured to be arranged directly facing the base.

### BRIEF DESCRIPTION OF THE FIGURES

The invention will become clearer from the following description, provided by way of a non-limiting example, to be read with reference to the attached figures, in which:
Figure 1 is a flow diagram of the process according to embodiments of the present invention;

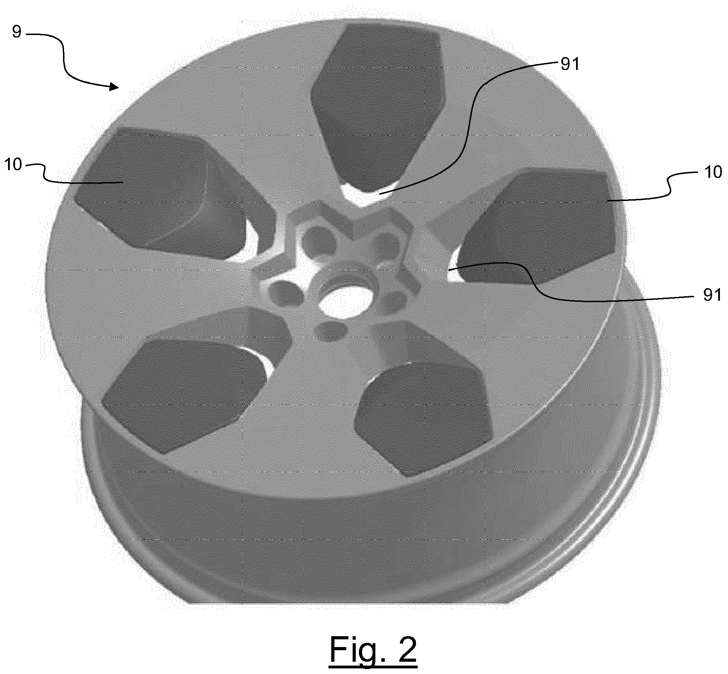

Fig. 2 shows an illustration of an example of a wheel rim with closing elements mounted so as to cover partially openings in the rim;

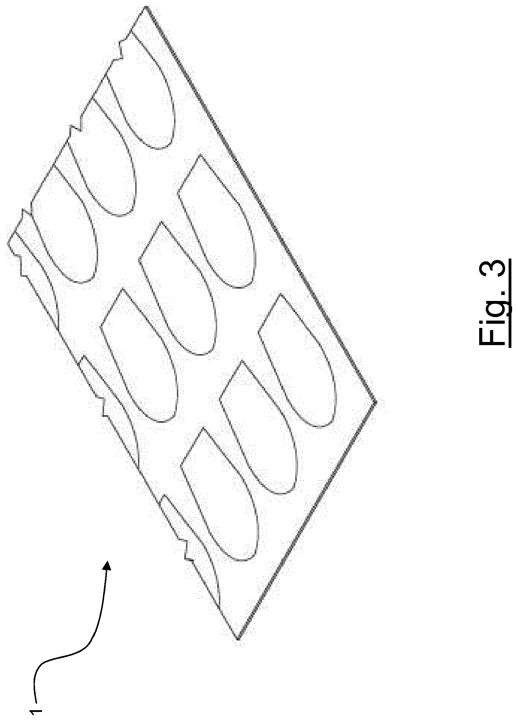

Fig. 3 shows a flat sheet made of a first material for the manufacture of closing elements;
Fig. 4 shows a portion of the sheet of Fig. 3 following a thermoforming step;
Fig. 5 shows the coupling together (co-moulding) of the thermoformed and cut sheet portion and a base; and
Fig. 6 shows a cross-section through the closing element after co-moulding.

### DETAILED DESCRIPTION

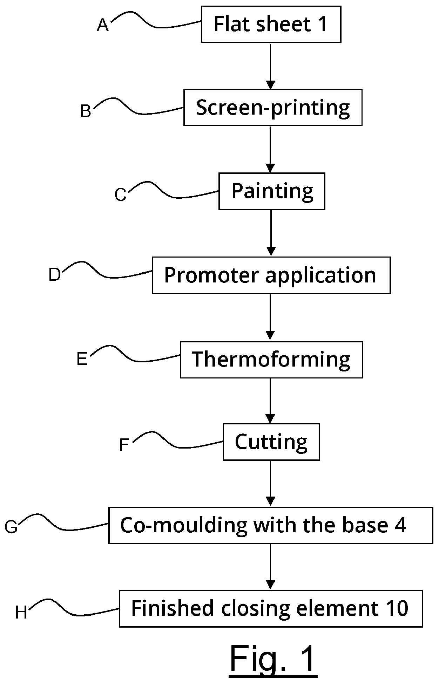

Fig. 1 shows, in simplified form, a number of steps of the process for the production of closing elements (10) according to the present invention. Obviously, the various steps may also be performed in an order different from that shown in Fig. 1. Some of the steps shown in the flow diagrams are optional. Other steps may be added to the process.

As will become clear below, the closing element according to the present invention is made by joining an outer shell, made of a first thermoplastic material, together with a base made of a second thermoplastic material.

The outer shell may be made by means of steps A to F. By means of the subsequent steps the outer shell may be joined together with the base.

According to the present invention, a substantially flat sheet 1 made of a first thermoplastic material is provided (A). Advantageously, the sheet 1 is a sheet 1 of transparent or substantially transparent material. Advantageously, the first thermoplastic material is an engineering plastic, i.e. a polymer which has optimum physical-mechanical properties, such as rigidity, strength, ductility, workability, as well as resistance to high temperatures, static and dynamic loads and ageing.

According to embodiments, the first material comprises, or essentially consists of, a thermoplastic polymer or a copolymer containing polyacrylonitrile. For example, the first material comprises, or essentially consists of, polymethyl methacrylate (PMMA), namely a plastic material formed by the polymers of methyl methacrylate, the methyl ester of methacrylic acid.

According to other embodiments, the first material comprises, or essentially consists of, a polycarbonate, namely a thermoplastic polymer obtained from carbonic acid. The polycarbonates form part - with many differences - of polyester resins. As is known, polycarbonates have good properties in terms of resistance to mineral acids, aliphatic hydrocarbons, petrol, greases, oils, alcohols and water below 70°C.

According to other embodiments, the first material comprises, or essentially consists of, polyamide (PA). Polyamides are macromolecules characterized by the amide group CO-NH. The characteristics of the single types of polyamide comprise: relatively low specific weight, impact and wear resistance, resistance to solvents, oils, greases and fuels. The group of polyamides includes nylon (aliphatic and semi-aromatic polyamides) and aramids (Kevlar and Nomex, aromatic polyamides).

According to other embodiments, the first material comprises, or essentially consists of, any mixture of engineering plastics, for example any mixture of the aforementioned engineering plastics. A material considered suitable is known by the trade name "Bayblend". It is a mixture of different engineering plastics, for example polycarbonate (PC) and acrylonitrile-butadiene-styrene (ABS).

The substantially flat sheet may be decorated by means of application of a paint or pigment (step C in Fig. 1). In addition or alternatively, the substantially flat sheet is subjected to a screen-printing step (step B in Fig. 1). By means of these steps, the substantially flat sheet may be decorated with a logo, writing, geometrical figures or a combination of these options. As may be easily imagined, advantageously steps B and/or C are carried out on the substantially flat sheet and not on a shaped part.

According to embodiments, the screen-printing on the flat sheet (which may be advantageously transparent or substantially transparent as mentioned above) is carried out on the "second surface", namely on the inner surface, facing the rim and not facing outwards. In this way, the screen-printing effect is protected by the thickness of the sheet. Therefore, contact between the outer surface of the shell and, for example, a stone or a pavement does not damage the aesthetic appearance of the outer shell.

According to embodiments, a transparent protection may be applied in order to protect the surface of the closing element from atmospheric agents or from contact with stones or other objects.

Following steps B and/or C, a step D of applying an adhesion promoter may be carried out. The adhesion promoter must be applied, for example, if there is partial or total incompatibility between the first material of the substantially flat sheet and the material of the base which will be described below. For example, transparent polycarbonate is compatible with another polycarbonate or with "Bayblend", but the adhesion to nylon is not guaranteed, in particular considering the environment and the stresses acting on the closing element during use.

The adhesion prompter may also have the function of protecting the screen-printed surface before the co-moulding step.

The adhesion promoter may substantially comprise a glue which is applied to the rear of the first sheet by means of rolling, screen-printing or transfer of a film which is supplied in reel form and on which the glue has been spread. Preferably the glue is configured so that, at room temperature, the glue is not activated.

When the plastic element, after thermoforming, is inserted into the mould in order to be overmoulded, the glue is activated by the temperature of the co-moulding process and, in this way, the base and shell are made to adhere together.

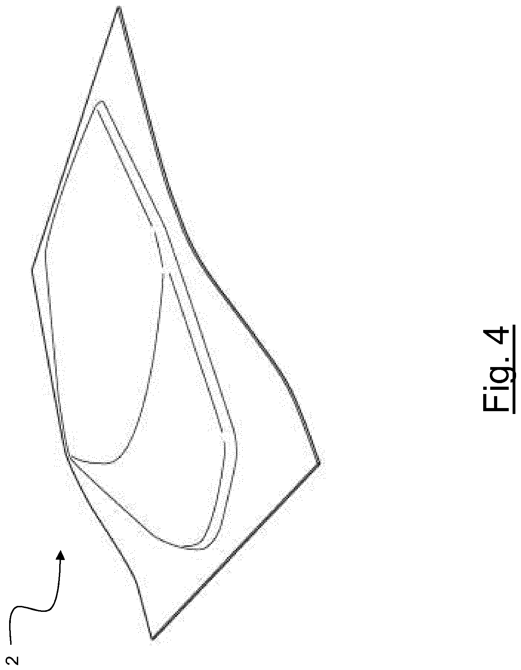

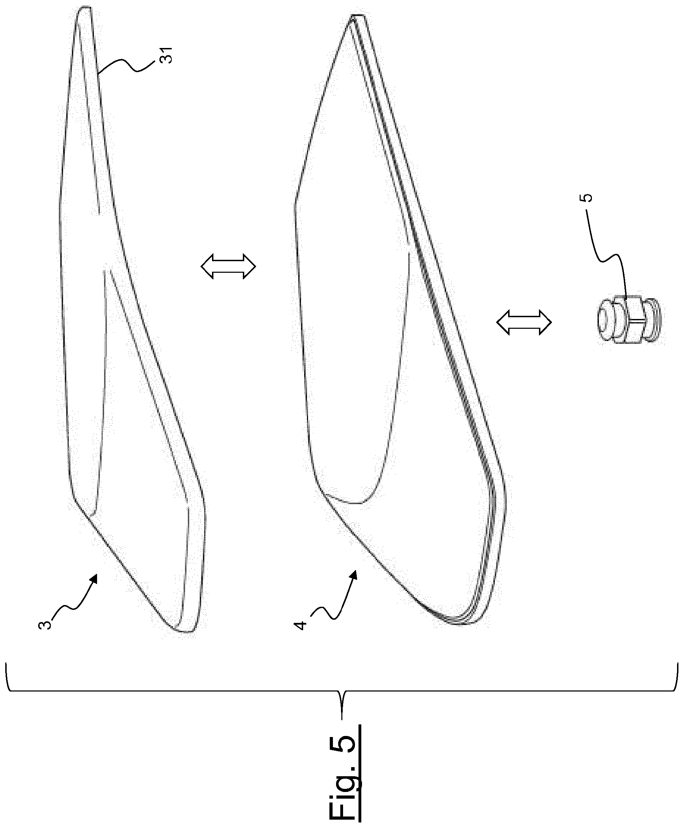

As mentioned above, during a step E the substantially flat sheet 1 is thermoformed (Fig. 4), namely it is given, in the hot state, the necessary shape substantially corresponding to the external shape of the finished part. Following thermoforming, the thermoformed sheet is cut (step F) or in any case cut so as to obtain a plurality of separate bodies, namely the outer shells 3, each with a shape substantially corresponding to the external shape of the finished part. A shell 3 is shown in Fig. 5.

As an alternative to the aforementioned sequence (step E -> step F), the substantially flat sheet 1 may be cut before performing the thermoforming and steps E and F are therefore inverted with respect to the sequence shown in Fig. 1.

Application of the adhesion promoter may also be performed after the thermoforming operation.

At the end of steps E and F, a plurality of suitably shaped, screen-printed and/or painted bodies is obtained. Each body thus obtained forms the outer shell 3 of a closing element 10 for a wheel rim 9.

Subsequently, during a step G (see also Fig. 5), the shell 3 1 is co-moulded together with a base 4 made of a second material. During the co-moulding step, fastening members are provided. The fastening members allow the closing element 10 to be fastened, directly or indirectly, to the rim 9.

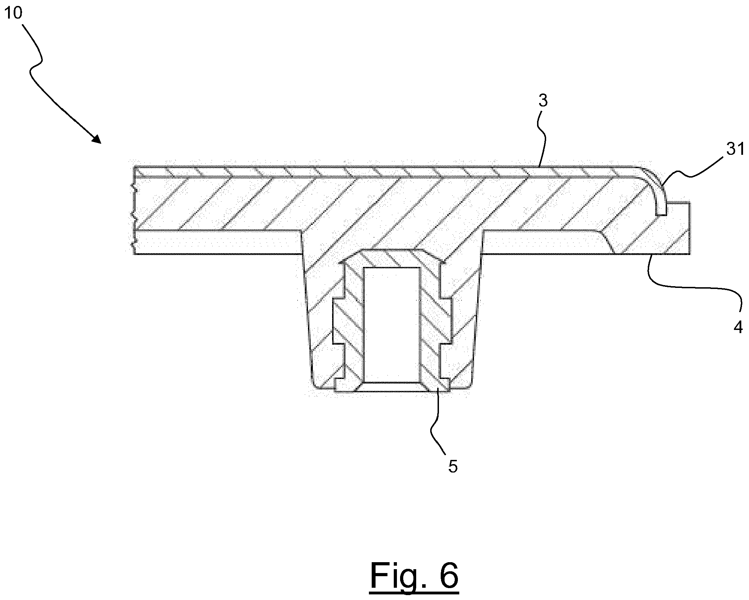

The fastening members may comprise threaded screwing bushes 5, clips or other known fastening members. By way of example, in Fig. 5 and Fig. 6 a screwing bush is shown. The bush may be made of brass or the like.

According to embodiments, the second material, namely the base material, comprises, or essentially consists of, a thermoplastic polymer or a copolymer containing polyacrylonitrile. For example, the second material comprises, or essentially consists of, polymethyl methacrylate (PMMA), namely a plastic material formed by polymers of methyl methacrylate, the methyl ester of methacrylic acid.

According to embodiments, the second material comprises, or essentially consists of, a polycarbonate.

According to other embodiments, the second material comprises, or essentially consists of, polyamide (PA). For example, it may be nylon or Kevlar or Nomex, or any mixture thereof.

According to other embodiments, the first material comprises, or essentially consists of, any mixture of engineering plastics, for example any mixture of the aforementioned engineering plastics. A material considered suitable is known by the trade name "Bayblend". It is a mixture of different engineering plastics, for example polycarbonate (PC) and acrylonitrile-butadiene-styrene (ABS).

In addition (or as an alternative) to the physical coupling action resulting from the co-moulding process, in embodiments a mechanical coupling system may be provided. The outer shell 3 may be mechanically fastened to the base 4 by means of a fold 31 along the entire edge of the outer shell 3 or along a part thereof. Depending on the shape of the closing element 10 to be made and therefore the constructional requirements, the fastening fold 31 could be interrupted along one or more sections.

## Claims

1. A closing element (10) configured to close at least partially an opening (91) in a rim (9) of a vehicle wheel, comprising:
- an outer shell (3) comprising a first thermoplastic material;
- a base (4) comprising a second thermoplastic material, the base (4) being integrally joined together with the outer shell (3),
wherein the first thermoplastic material and the second thermoplastic material comprise an engineering plastic.

2. The closing element (10) according to claim 1, wherein the outer shell (3) is at least partially transparent.

3. The closing element (10) according to claim 1 or 2, wherein the outer shell (3) comprises a surface screen-printed and/or decorated with paint and/or pigments.

4. The closing element (10) according to claim 3, wherein the outer shell (3) comprises a first outer surface and a second inner surface, wherein the surface screen-printed and/or decorated with paint and/or pigments is the second inner surface.

5. The closing element (10) according to any one of the preceding claims, wherein the outer shell (3) is thermoformed from a flat sheet.

6. The closing element (10) according to any one of the preceding claims, wherein the outer shell (3) is joined together with the base (4) by means of a first co-moulding coupling operation and/or a second mechanical coupling operation.

7. The closing element (10) according to claim 6, wherein the outer shell (3) is mechanically fastened to the base (4) by means of a fold (31) along the entire edge of the outer shell (3) or along a part of the edge of the outer shell (3).

8. The closing element (10) according to any one of the preceding claims, wherein the engineering plastic is any material selected from: a thermoplastic polymer or a copolymer containing polyacrylonitrile, a thermoplastic polymer obtained from carbonic acid, a polyester resin, a polyamide or any blend of engineering plastics.

9. The closing element (10) according to any one of the preceding claims, wherein the first material is substantially the same as the second material.

10. The closing element (10) according to any one of the preceding claims, wherein the engineering plastic comprises, or essentially consists of, a thermoplastic polymer or a copolymer containing polyacrylonitrile.

11. The closing element (10) according to any one of the preceding claims, wherein the engineering plastic comprises, or essentially consists of, a polycarbonate.

12. The closing element (10) according to any one of the preceding claims, wherein the engineering plastic comprises, or essentially consists of, a nylon, or Kevlar or Nomex.

13. The closing element (10) according to any one of the preceding claims, wherein the engineering plastic comprises, or essentially consists of, a mixture of polycarbonate and acrylonitrile-butadiene-styrene.

14. The closing element (10) according to any one of the preceding claims, further comprising a fixing member (5) for fixing the closing element (10) to a rim (9).

15. A process for manufacturing a closing element (10) configured to close at least partially an opening (91) in a rim (9) of a vehicle wheel, comprising the following steps in any sequence:
- providing (A) a substantially flat sheet (1) made of a first thermoplastic material comprising an engineering plastic;
- screen-printing (B) and/or painting (C) the sheet (1);
- thermoforming (E) the screen-printed and/or painted sheet (1);
- cutting (F) the thermoformed sheet so as to obtain a plurality of outer shells (3); and
- integrally joining (G) one of the outer shells (3) together with a base (4) made of a second thermoplastic material comprising an engineering plastic.

16. The process according to claim 15, wherein the integral joining step (G) comprises co-moulding a base (4) together with one of the outer shells (3) and/or providing a mechanical coupling (31).

17. The process according to claim 15 or 16, further comprising a step (D) of applying an adhesion promoter to improve the adhesion between shell (3) and base (4).

18. The process according to claim 15, 16 or 17, wherein the first material is any material selected from: a thermoplastic polymer or a copolymer containing polyacrylonitrile, a thermoplastic polymer obtained from carbonic acid, a polyester resin, a polyamide or any blend of engineering plastics, and wherein the second material is any material selected from: a thermoplastic polymer or a copolymer containing polyacrylonitrile, a thermoplastic polymer obtained from carbonic acid, a polyester resin, a polyamide or any blend of engineering plastics.

19. The process according to claim 15, 16, 17 or 18, wherein the step (B) of screen-printing or painting (C) the sheet (1) comprises the step of screen-printing and/or painting the inner surface, i.e. the surface configured to be directly facing the base (4).
